# EUROPÄISCHE PATENTSCHRIFT

(11) **EP 2 313 232 B1**
(45) Veröffentlichungstag und Bekanntmachung des Hinweises auf die Patenterteilung: **30.05.2012**
(21) Anmeldenummer: 09777738.7
(22) Anmeldetag: 07.08.2009
(51) Int. Cl.: B23Q 11/00, H02K 41/02, F16F 15/073

(54) **FERTIGUNGSMASCHINE FÜR UNRUNDE WERKSTÜCKE**
PRODUCTION MACHINE FOR NON-CIRCULAR WORKPIECES
MACHINE DE FABRICATION DE PIÈCES NON RONDES

(30) Priorität: 12.08.2008 DE 102008038728
(43) Veröffentlichungstag der Anmeldung: 27.04.2011
(73) Patentinhaber: J.G. Weisser Söhne GmbH & Co. KG, 78112 St. Georgen (DE)
(72) Erfinder: JÖRG, Reiner, 78144 Schramberg (Tennenbronn) (DE)
(74) Vertreter: Maucher, Wolfgang
(86) Internationale Anmeldenummer: PCT/EP2009/005742
(87) Internationale Veröffentlichungsnummer: WO 2010/017916

(56) Entgegenhaltungen:
- EP-A- 0 333 128
- DE-A1- 19 810 996

## Beschreibung

Die Erfindung betrifft eine Fertigungsmaschine für unrunde Werkstücke, insbesondere eine Unrunddrehmaschine, mit einem oszillierend bewegbaren Werkzeug und Werkzeugträger und mit einem relativ dazu gegensinnig bewegbaren, zur Impulsentkopplung dienenden Ausgleichskörper, wobei die Bewegung des Werkzeuges durch einen zwischen Werkzeugträger und Ausgleichskörper wirkenden Antrieb auslösbar oder ausführbar ist.

Derartige Fertigungsmaschinen sind beispielsweise aus der DE 198 10 996 A1 bekannt und werden insbesondere zur Hochgeschwindigkeitsfertigung unrunder Drehteile oder allgemein bei hochdynamischen Werkzeugzustelleinheiten eingesetzt. Hierbei dient die Impulsentkopplung dazu, zu verhindern, dass die Stöße durch die hochdynamischen Werkzeugbewegungen auf das Gehäuse oder die Verankerung am Gehäuse in voller Stärke übertragen werden, was eine negative Beeinflussung der Bearbeitungsgenauigkeit zur Folge hätte.

Aus M. Weck, J. Hennig: Entwicklung und Einsatz einer hochdynamischen Werkzeugzustelleinheit mit hydrostatischer Lagerung, Abschlussbericht, Forschungsgemeinschaft Ultrapräzisionstechnik e. V., Aachen, Oktober 2002, ist bekannt, dass zur Vermeidung von Haftreibung bei der Führung des Werkzeugträgers, des sogenannten Stick-Slip-Effekts, aerostatische oder hydrostatische Führungen die Anforderungen an Genauigkeit und Gleichmäßigkeit der Bewegungen erfüllen, während aufgrund der hohen Dynamik des Systems bei gleichzeitig geringem Verfahrweg die Verwendung von Wälzlagern nicht in Frage kommt.

Hydrostatische Führungen erfordern aber einen erhöhten konstruktiven Aufwand durch Zuleitungen, Versorgungseinrichtungen und Maßnahmen zur Verhinderung von Leckagen. Durch diesen erhöhten konstruktiven Aufwand werden die Fertigungsmaschinen teuer, anfällig bei Betrieb unter rauen Umgebungsbedingungen und wartungsintensiv.

Aus der EP 0 333 128 A2 ist eine Magnetscheibenvorrichtung bekannt, bei welcher zur Reduzierung von Vibrationen an einem linearen Zugriffsmechanismus des Magnetkopfes Ausgleichsmassen vorgesehen sind, mit welchen eine Ausgleichskraft erzeugbar ist, welche einen Rückstoß eines den Magnetkopf tragenden Wagens kompensiert. Hierzu werden die Ausgleichsmassen mit einer separaten Tauchspule entsprechend angetrieben.

Der Erfindung liegt die Aufgabe zugrunde, eine Fertigungsmaschine für unrunde Werkstücke zu schaffen, die einen einfachen konstruktiven Aufbau aufweist.

Die Aufgabe wird bei der Erfindung durch die Merkmale des Anspruchs 1 gelöst. Insbesondere ist vorgesehen, dass bei einer Fertigungsmaschine der eingangs genannten Art der Werkzeugträger durch Wälzkörper gelagert ist, dass der Ausgleichskörper über Führungselemente an einem Gehäuseteil der Fertigungsmaschine aufgehängt ist und dass der Ausgleichskörper eine derart mehrfache Masse der Masse des das Werkzeug tragenden Werkzeugträgers hat, dass die den oszillierenden Bewegungen des Werkzeugträgers entsprechenden Ausgleichshübe des Ausgleichskörpers im Bereich der elastischen Verformung der Führungselemente liegen. Somit sind vorteilhaft die Ausgleichshübe durch die elastische Verformung der Führungselemente aufnehmbar, und es sind zusätzliche hydrostatische oder aerostatische Lagerungen des Ausgleichskörpers verzichtbar. Die Erfindung macht sich insbesondere die überraschende Erkenntnis zu Nutze, dass der Stick-Slip-Effekt nur bei der Lagerung des Ausgleichskörpers unbedingt zu vermeiden ist, während die Lagerung des Werkzeugträgers durchaus Haftreibung aufweisen kann, da diese durch eine entsprechende Dimensionierung des Antriebs überwindbar ist. Es hat sich nämlich herausgestellt, dass es zur Vermeidung einer negativen Beeinflussung der Bearbeitungsgenauigkeit durch Rückstöße ausreichend ist, wenn der Ausgleichskörper verzögerungsfrei auf die Rückstöße reagieren kann. Dies wird dadurch erreicht, dass eine Lagerung des Ausgleichskörpers vorgeschlagen wird, die haftreibungsfrei erfolgt. Statt der sonst üblichen hydrostatischen oder aerostatischen Lagerung wird bei der Erfindung eine Aufhängung des Ausgleichskörpers über Führungselemente an einem Gehäuseteil vorgeschlagen, wobei die Führungselemente bei Ausgleichshüben innerhalb einer bestimmten Hubmenge elastisch verformbar sind. Durch die Ausgestaltung der Masseverhältnisse von Ausgleichskörper und bewegten Teilen, also Werkzeug mit Werkzeugträger, wird vorteilhaft erreicht, dass die Hübe des Ausgleichskörpers derart kurz sind, dass der Bereich der elastischen Verformbarkeit der Führungselemente nicht überschritten wird.

Gemäß einer vorteilhaften Ausgestaltung der Erfindung kann vorgesehen sein, dass die Masse des Ausgleichskörpers wenigstens das Dreifache, insbesondere wenigstens das Fünffache oder wenigstens das Zehnfache, der Masse des das Werkzeug tragenden Werkzeugträgers beträgt. Versuche haben ergeben, dass für die genannten Masseverhältnisse eine ausreichende Untersetzung der beim üblichen Gebrauch der Fertigungsmaschine auftretenden Hübe des Werkzeuges in Ausgleichshübe des Ausgleichskörpers erfolgt, so dass die Ausgleichshübe im Bereich der elastischen Verformbarkeit der Führungselemente liegen. Die Führungselemente bewirken daher einerseits eine Führung der Bewegung des Ausgleichskörpers und andererseits eine Rückstellkraft, die den Ausgleichshüben entgegengesetzt ist. Weitere Lagerungen zur Führung oder Mittel für Rückstellkräfte sind verzichtbar.

Eine besonders geradlinige Führung der Ausgleichsbewegungen des Ausgleichskörpers wird erreicht, wenn die Führungselemente in Ruhestellung eine Form haben, deren Ausdehnung in Richtung der Ausgleichshübe wesentlich geringer als deren Ausdehnung quer zur Richtung der Ausgleichshübe ist, insbesondere weniger als ein Zehntel der Ausdehnung quer zur Richtung der Ausgleichshübe beträgt. Hierdurch ist eine bevorzugte Auslenkungsrichtung der Führungselemente vorgegeben, die mit der Richtung der Ausgleichshübe übereinstimmt. Bewegungen quer zur Richtung der Ausgleichshübe sind bei dem Ausgleichskörper somit verhindert, wodurch eine hohe Genauigkeit der Bewegung mit geringen Geradheitsabweichungen erreicht wird.

Besonders günstig ist es, wenn die Führungselemente jeweils beidseits der durch die Ausgleichshübe vorgegebenen Arbeitsebene an einem Gehäuseteil befestigt sind und zwischen diesen Befestigungspunkten jeweils an dem Ausgleichskörper angreifen. Die Führungselemente können hierbei einstückig oder am Ausgleichskörper unterbrochen ausgebildet sein.

Gemäß einer Ausgestaltung der Erfindung kann vorgesehen sein, dass die Führungselemente eine Bewegung des Ausgleichskörpers seitlich oder quer zur Richtung der Ausgleichshübe verhindern. Hierzu können beispielsweise die Führungselemente entsprechende geometrische Formgebungen aufweisen und/oder entsprechend an dem Ausgleichskörper angreifen und/oder in ihrer Lage ausgerichtet sein. Die Verhinderung einer Bewegung quer zur Richtung der Ausgleichshübe ist notwendig, um eine definierte Führung des Werkzeugträgers und damit des Werkzeuges in Bezug auf das Werkstück, welches relativ zu dem Gehäuseteil fixiert ist, zu erreichen.

Eine besonders einfache Ausführungsform ergibt sich, wenn die Führungselemente teilweise oder ausschließlich als streifenförmige Federn ausgebildet sind, welche der durch die Ausgleichshübe bewirkte Auslenkung des Ausgleichskörpers entgegenwirken.

Gemäß einer Ausgestaltung der Erfindung kann vorgesehen sein, dass jedes der Führungselemente flach oder laschenförmig ausgebildet ist und in Ruhelage im Wesentlichen in einer Ebene liegt, zu welcher die Richtung der Ausgleichshübe senkrecht oder quer verläuft, wobei die Befestigung, die Form und die Ausrichtung der Führungselemente deren Bewegung und damit eine Bewegung des Ausgleichskörpers in dieser Ebene erschweren oder verhindern, also der Ausgleichskörper allein dadurch geführt ist. Somit ist eine einfache Formgestaltung beschrieben, durch welche eine Verhinderung von Bewegungen des Ausgleichskörpers seitlich oder quer zur Richtung der Ausgleichshübe erreicht wird.

Eine Führung der Ausgleichshübe des Ausgleichkörpers mit besonders geringen oder ohne Geradheitsabweichungen ergibt sich, wenn die Führungselemente paarweise an in Richtung der Ausgleichshübe einander gegenüber liegenden Enden des Ausgleichskörpers angreifen. Hierdurch wird vorteilhaft erreicht, dass die Führungselemente in Richtung der Ausgleichshübe einen größtmöglichen Abstand zueinander einhalten, wodurch eine besonders winkelgenaue Führung der Ausgleichshübe erreicht wird. Vorzugsweise kann vorgesehen sein, dass die Führungselemente in Ruhelage gegeneinander vorgespannt sind. Durch diese Vorspannung wird eine besonders gute Führung der Bewegung von Bewegungsbeginn an erreicht.

Eine nochmals verbesserte Stabilität gegenüber seitlichen Auslenkungen des Ausgleichskörpers wird erreicht, wenn an je einem Ende des Ausgleichskörpers ein Paar von Führungselementen angreift, die im Abstand zueinander parallel verlaufen und die parallel wirken. Hierbei erstreckt sich der Abstand vorzugsweise quer zur Richtung der Ausgleichshübe.

Gemäß einer Ausgestaltung der Erfindung kann vorgesehen sein, dass die Führungselemente mit ihren Enden an einem Gehäuseteil der Fertigungsmaschine befestigt sind und mit einem in ihrer Mitte zwischen den Enden des jeweiligen Führungselementes gelegenen Bereichs am Ausgleichskörper angreifen. Alternativ oder zusätzlich kann vorgesehen sein, dass die Führungselemente paarweise mit einem Ende jeweils am Ausgleichskörper angreifen, wobei die anderen, freien Enden der Führungselemente eines Paares voneinander weggerichtet sind, insbesondere in entgegengesetzte Richtungen zeigen, und an dem Gehäuseteil der Fertigungsmaschine befestigt sind.

Zur Ausführung schneller und genauer Hübe des von dem Werkzeugträger getragenen Werkzeugs kann vorgesehen sein, dass der Antrieb ein Linearmotor oder ein Tauchanker oder dergleichen ist. Vorzugsweise kann hierbei vorgesehen sein, dass der Antrieb von einem Steuer- und Regelkreis angesteuert wird, bei welchem die Position des Werkzeuges im Bezug auf das Werkstück und/oder den Gehäuseteil eine Regelgröße darstellt.

Zum Erreichen eines günstigen Masseverhältnisses zwischen Werkzeugträger und Ausgleichskörper und folglich zum Erreichen der gewünschten Untersetzung der Hübe des Werkzeugträgers in Ausgleichshübe kann vorgesehen sein, dass der Stator oder der durch Bestromung erregbare Teil des Antriebes mit dem Ausgleichskörper und der permanenterregte Teil des Antriebes mit dem Werkzeughalter verbunden sind. Es hat sich herausgestellt, dass der durch Bestromung erregbare Teil des Antriebes häufig eine größere Masse aufweist, als der permanenterregte Teil des Antriebes, weshalb die beschriebene Anordnung die Ausbildung eines erfindungsgemäßen Massenverhältnisses zwischen Werkzeugträger mit Werkzeug und Ausgleichskörper begünstigt.

Besonders günstig ist es, wenn der Werkzeugträger mit seinen Aufbauten eine möglichst geringe Masse aufweist, weil dann die Masse des Ausgleichskörpers insgesamt nicht übermäßig groß gewählt werden muss. Beispielsweise kann vorgesehen sein, dass am Werkzeugträger ein Schlitten ausgebildet ist, der die Permanentmagnete des Linearmotors trägt. Hierdurch ergibt sich ein kompakter, massesparender Aufbau.

Vorzugsweise kann vorgesehen sein, dass der Schlitten sogar in Leichtbauweise ausgeführt ist.

Eine weitere Verminderung des Eigengewichts von Werkzeugträger und Aufbauten ergibt sich, wenn die Permanentmagnete den Schlitten aussteifen. Die Permanentmagnete übernehmen somit eine Doppelfunktion, und zusätzliche Versteifungen des Schlittens zur Aufnahme der elektromagnetisch eingebrachten Vortriebskräfte sind reduzierbar oder sogar verzichtbar.

Eine besonders robuste, leichte Ausbildung des permanent erregten Teils des Antriebes ergibt sich, wenn die Permanentmagnete auf beiden dem Stator des Linearmotors zugewandten Seiten mit einer Abdeckung, vorzugsweise einer Kohlefaserplatte abgedeckt und/oder stoffschlüssig verbunden sind.. Durch die Kohlefaserplatte wird die Stabilität der Gesamtkonstruktion bei gleichzeitig minimaler Masseerhöhung verbessert. Durch die Anordnung der Abdeckung wird die für die Entwicklung einer ausreichenden elektromagnetischen Vortriebskraft des Antriebes erforderliche Fläche für die Stabilisierung des Schlittens ausgenutzt.

Eine besonders leichte und gleichzeitig robuste Ausgestaltung des Schlittens ergibt sich, wenn der die Permanentmagnete aufnehmende Zwischenraum zwischen den Abdeckungen mit einer Vergussmasse ausgegossen ist. Durch die Vergussmasse wird eine zusätzliche Stabilisierung des Schlittens erreicht.

Für eine Erhöhung der Verbindungssteifigkeit des Schlittens kann vorgesehen sein, dass die Permanentmagnete in eine Tragestruktur eingefügt sind.

Eine einfache und robuste und für die erforderlichen Genauigkeiten ausreichende Führung der Bewegungen des Werkzeugträgers ergibt sich, wenn die Wälzkörper an dem Schlitten angreifen. Vorzugsweise greifen die Wälzkörper an einer mit dem Gehäuseteil verbundenen Schiene an oder sind mit dem Gehäuseteil fest verbunden. Die Wälzkörper bilden somit ein Wälzlager, durch welches der Werkzeugträger an dem Gehäuseteil oder an einem mit diesem Gehäuseteil fest verbundenen Maschinenteil gelagert sind.

Gemäß einer Ausgestaltung der Erfindung kann vorgesehen sein, dass der Hub der Oszillationsbewegung des Werkzeuges kleiner ist als der Umfang der Wälzkörper des Wälzlagers. Es hat sich herausgestellt, dass bei der hierzu erforderlichen Dimensionierung der Wälzkörper die Reibung in der Lagerung des Werkzeugträgers ein für die Anforderungen der Genauigkeit der Bewegungsführung erforderliches Maß nicht übersteigt.

Die Erfindung ist besonders vorteilhaft einsetzbar, wenn der Hub der Oszillationsbewegung 0,01 mm bis 45 mm beträgt und gleichzeitig der Ausgleichshub 2 mm nicht übersteigt.

Die Erfindung wird nun anhand eines Ausführungsbeispieles näher beschrieben, ist jedoch nicht auf dieses Ausführungsbeispiel beschränkt sondern auf die beigefügten Ansprüche.

Es zeigt
- Fig. 1: eine Werkzeugzustelleinheit einer Fertigungsmaschine in Frontalansicht auf den Werkzeugträger,
- Fig. 2: eine Schnittansicht entlang der Linie A-A der Werkzeugzustelleinheit aus Figur 1 und
- Fig. 3: eine Schnittansicht entlang der Linie B-B der Werkzeugzustelleinheit aus Figur 1.

Eine im ganzen mit 1 bezeichnete Werkzeugzustelleinheit einer Fertigungsmaschine für unrunde Werkstücke hat einen Werkzeugträger 2, der zur Aufnahme eines Werkzeuges ausgebildet und oszillierend bewegbar ist.

Zur Impulsentkopplung dient ein Ausgleichskörper 3, wobei die Bewegung des Werkzeuges durch einen zwischen Werkzeugträger 2 und Ausgleichskörper 3 wirkenden Antrieb 4 auslösbar oder ausführbar ist. Durch die Beschleunigungen des Werkzeugträgers 2, die durch den Antrieb 4 ausgelöst oder erzwungen werden, entstehen Rückstöße, die durch entsprechende Bewegungen des Ausgleichskörpers 3 aufgenommen werden. Diese Rückstöße wirken somit nicht auf andere Komponenten der Fertigungsmaschine ein und können somit kein negatives Beeinflussen der Bearbeitungsgenauigkeit bewirken.

Der aus mehreren Komponenten bestehende bzw. mit mehreren Komponenten verbundene Werkzeugträger 2 ist durch Wälzkörper 5 gelagert und derart geführt, dass nur ein Bewegungsfreiheitsgrad, nämlich der Vorschub des am Werkzeugträger 2 eingespannten Werkzeugs, verbleibt.

Der Ausgleichskörper 3 ist über Führungselemente 6 an einem Gehäuseteil 7 der Werkzeugzustelleinheit 1 und damit der Fertigungsmaschine aufgehängt.

Der Ausgleichskörper 3 ist aus mehreren Komponenten zusammengesetzt und weist eine Masse auf, die ein Vielfaches der Masse des das Werkzeug tragende Werkzeugträgers 2 beträgt.

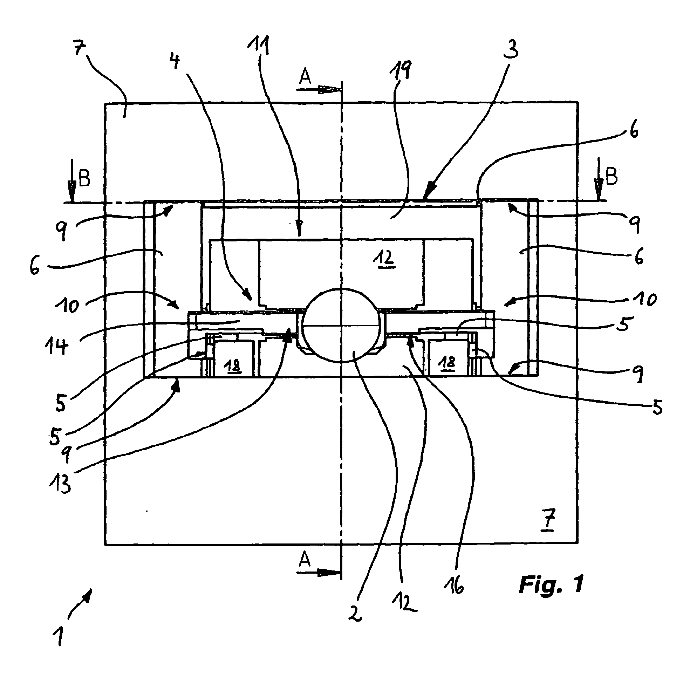

Die Führungselemente 6 sind als streifenförmige Federn ausgebildet, die in Ruhelage im Wesentlichen in einer Ebene liegen, zu welcher die Richtung der Ausgleichshübe senkrecht verläuft. Die Richtung der Ausgleichshübe wie auch die Richtung der Vorschubshübe des Werkzeugträgers verlaufen in Figur 1 senkrecht auf der Zeichenebene.

Es wird somit eine in Fig. 1 horizontale und senkrecht auf der Zeichenebene stehende Arbeitsebene definiert, in welcher die Mittelachse des Werkzeugträgers liegt, und die Führungselemente sind jeweils beidseits dieser Ebene, also oben und unten, an dem Gehäuseteil befestigt. Der Ausgleichskörper 3 ist daher zwischen den oberen und unteren Befestigungspunkten jedes Führungselements 6 angeordnet und aufgehängt.

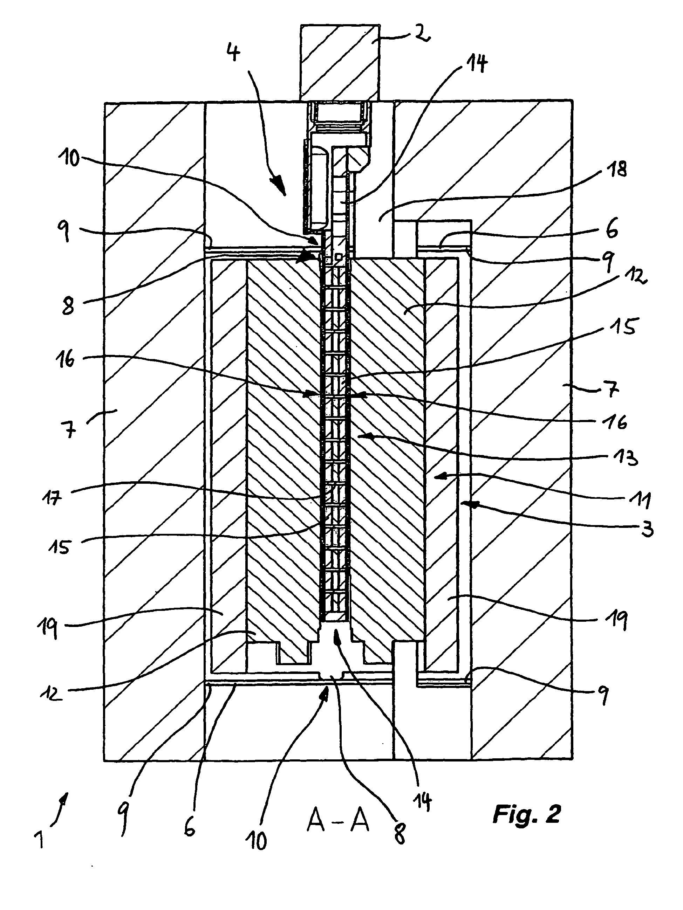

In der Schnittansicht gemäß Figur 2 ist ersichtlich, dass die Führungselemente 6 paarweise an in Richtung der Ausgleichshübe, die in Figur 2 in der Zeichenebene verläuft, einander gegenüberliegende Enden 8 des Ausgleichskörpers 3 angreifen. Hierdurch ist der Ausgleichskörper 3 an dem Gehäuseteil 7 aufgehängt.

In Figur 1 ist ersichtlich, dass die Führungselemente 6 paarweise im Abstand zueinander parallel verlaufen und parallel wirken. Insbesondere greift bei einem Paar von Führungselementen 6 je ein Führungselement an einem in Bezug auf die Ausgleichshübe seitlichen äußeren Enden des Ausgleichskörpers 3 an.

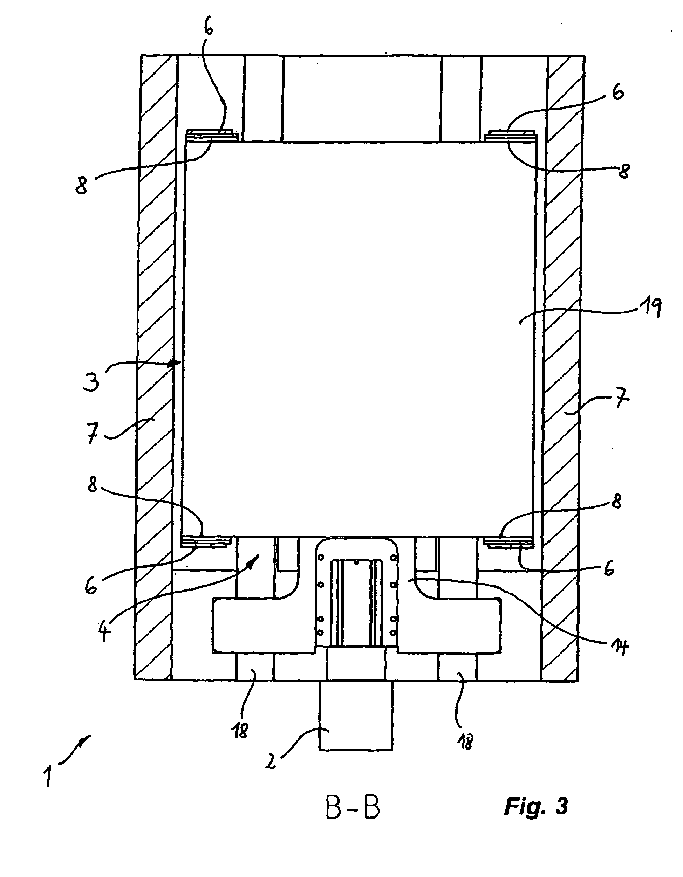

Figur 3 zeigt, dass somit je ein Führungselement 6 an einer Ecke des eine rechteckige Grundform aufweisenden Ausgleichskörpers 3 angreift.

In Figur 2 ist ersichtlich, dass die Führungselemente 6 mit ihren Enden 9 an einem Gehäuseteil 7 der Werkzeugzustelleinheit 1 und damit der Fertigungsmaschine befestigt sind und mit einem in ihre Mitte zwischen den Enden 9 des jeweiligen Führungselementes 6 gelegenen Bereich 10 am Ausgleichskörper 3 angreifen. Die freien, nicht am Ausgleichskörper 3 direkt angreifenden Enden 9 der Führungselemente 6 zeigen somit voneinander weg in entgegengesetzte Richtungen und sind zur Aufhängung an dem Gehäuseteil 7 der Fertigungsmaschine 1 befestigt.

In der Schnittdarstellung gemäß Figur 2 ist der Linearmotor 11 ersichtlich, der den Antrieb 4 zur Bewegung des Werkzeugträgers 2 bildet.

Der Stator 12 des Linearmotors 11 ist Bestandteil des Ausgleichkörpers 3 und trägt zu dessen Masse bei.

Der permanenterregte Teil 13 des Antriebes 14 ist dagegen mit dem Werkzeugträger 2 fest verbunden.

Somit wird durch eine Bestromung des Stators 12 eine Auslenkung des permanenterregten Teiles 13 bewirkt, aus der ein Vortrieb des Werkzeugträgers 2 resultiert.

Zur Aufnahme des permanenterregten Teiles 13 des Antriebes 4 ist ein Schlitten 14 ausgebildet, der die Permanentmagnete 15 des Linearmotors 11 trägt und an dem der Werkzeugträger 2 befestigt ist.

Der Schlitten 14 ist in Leichtbauweise ausgeführt, wobei die Permanentmagnete 15 den Schlitten 14 aussteifen und auf beiden dem Stator 12 der Linearmotors 14 zugewandten Seiten mit einer Abdeckung 16 aus einem Kohlefaserverbundwerkstoff abgedeckt sind.

Der die Permanentmagnete 15 aufnehmende Zwischenraum 17 zwischen den Abdeckungen 16 ist zusätzlich mit einer Vergussmasse ausgegossen und bewirkt eine stoffschlüssige Verbindung von Permanentmagneten 15 und Abdeckung 16.

Zur Erhöhung der Verbindungssteifigkeit des Schlittens 14 ist eine nicht weiter ersichtliche, gitterartige Tragestruktur in dem Schlitten 14 ausgebildet.

In Figur 1 ist ersichtlich, dass der Schlitten 14 gelagert ist, indem die Wälzkörper 5 an ihm angreifen. Die Wälzkörper 5 rollen dabei auf einem Schienenblock 18 ab und führen den Schlitten in Richtung der Arbeitshübe des Werkzeugträgers 2.

Der Durchmesser der Wälzkörper 5 ist so gewählt, dass der Hub der Oszillationsbewegung des Werkzeugs bei Betrieb der Fertigungsmaschine 1 kleiner ist als der Umfang der Wälzkörper 5 des Wälzlagers. Die Wälzkörper 5 vollführen also bei Arbeitsbetrieb des Werkzeugträgers 2 keine vollständigen Umdrehungen, sondern oszillieren praktisch an einer festen Stelle. In der Schnittansicht gemäß Figur 2 ist ersichtlicht, dass die Schienenblöcke 18 an einem Teil des Gehäuseteils 7 befestigt sind, welches sich brückenartig in den Aufnahmeraum des Ausgleichskörpers 3 erstreckt, wobei die Erstreckungsrichtung parallel zur Richtung der Ausgleichshübe des Ausgleichskörpers 3 verläuft, und welches einen am Ausgleichskörper 3 ausgebildeten Hohlraum durchmisst.

Aus Figur 2 ist ersichtlich, dass der Ausgleichskörper 3 im Wesentlichen aus einem mit rechteckigem Außenquerschnitt und innen hohl ausgeführten Rahmen 19 und dem in diesem Rahmen 19 angebrachten Statorpaket 12 des Linearmotors zusammengesetzt ist. Die Masse des Ausgleichskörpers 3 ist somit wesentlich bestimmt durch die Masse des Stators 12 und die Masse des Rahmens 19.

Bei der Fertigungsmaschine für unrunde Werkstücke ist eine Werkzeugzustelleinheit 1 vorgesehen, die einen Werkzeugträger 2 zur Aufnahme des Werkzeuges und einen Ausgleichskörper 3 zur Impulsentkopplung hat, wobei die Arbeitsbewegung des Werkzeugträgers 2 durch einen zwischen Werkzeugträger 2 und Ausgleichskörper 3 wirkenden Antrieb 4 bewirkbar ist. Es wird vorgeschlagen, den Werkzeugträger 2 durch Wälzkörper 5 zu lagern und den Ausgleichskörper 3 über elastisch verformbare Führungselemente 6 an einem Gehäuseteil 7 der Werkzeugzustelleinheit 1 aufzuhängen, wobei die Masse des Ausgleichskörpers 3 derart größer als die Masse des das Werkzeug tragende Werkzeugträgers 2 ist, dass die Arbeitsbewegungen des Werkzeugträgers 2 Ausgleichshübe des Ausgleichskörpers 3 bewirken, die lediglich im Bereich der elastischen Verformbarkeit der Führungselemente 6 liegen. Die Führungselemente 6 bewirken somit Führung und Rückstellung des Ausgleichskörpers 3.

## Patentansprüche

1. Fertigungsmaschine für unrunde Werkstücke, insbesondere Unrunddrehmaschine (1), mit einem oszillierend bewegbaren Werkzeug und Werkzeugträger (2) und mit einem relativ dazu gegensinnig bewegbaren, zur Impulsentkopplung dienenden Ausgleichskörper (3), wobei die Bewegung des Werkzeugs durch einen zwischen Werkzeugträger (2) und Ausgleichskörper (3) wirkenden Antrieb (4) auslösbar oder ausführbar ist, **wobei** der Werkzeugträger (2) durch Wälzkörper (5) gelagert ist, **dadurch gekennzeichnet, dass** der Ausgleichskörper (3) über **eine Führung der Bewegung des Ausgleichskörpers bewirkende** und eine Rückstellkraft, die den Ausgleichshüben entgegengesetzt ist, bewinkende Führungselemente (6) an einem Gehäuseteil (7) der Fertigungsmaschine (1) aufgehängt ist und dass der Ausgleichskörper (3) eine derart mehrfache Masse der Masse des das Werkzeug tragenden Werkzeugträgers (2) hat, dass die den oszillierenden Bewegungen des Werkzeugträgers (2) entsprechenden Ausgleichshübe des Ausgleichskörpers (3) im Bereich der **die Ausgleichshübe aufnehmenden** elastischen Verformung der Führungselemente (6) liegen.

2. Fertigungsmaschine nach Anspruch 1, **dadurch gekennzeichnet, dass** die Masse des Ausgleichskörpers (3) wenigstens das Dreifache, insbesondere wenigstens das Fünffache oder wenigstens das Zehnfache, der Masse des das Werkzeug tragenden Werkzeugträgers (2) beträgt.

3. Fertigungsmaschine nach Anspruch 1 oder 2, **dadurch gekennzeichnet, dass** die Führungselemente (6) in Ruhestellung eine Form haben, deren Ausdehnung in Richtung der Ausgleichshübe wesentlich geringer als deren Ausdehnung quer zur Richtung der Ausgleichshübe ist, insbesondere weniger als ein Zehntel der Ausdehnung quer zur Richtung der Ausgleichshübe beträgt und/oder dass die Führungselemente (6) eine Bewegung des Ausgleichskörpers (3) seitlich oder quer zur Richtung der Ausgleichshübe verhindern.

4. Fertigungsmaschine nach einem der Ansprüche 1 bis 3, **dadurch gekennzeichnet, dass** die Führungselemente (6) teilweise oder ausschließlich als streifenförmige Federn ausgebildet sind, welche der durch die Ausgleichshübe bewirkten Auslenkung des Ausgleichskörpers (3) entgegenwirken, wobei jedes der Führungselemente (6) insbesondere flach oder laschenförmig ausgebildet ist und in Ruhelage im wesentlichen in einer Ebene liegt, zu welcher die Richtung der Ausgleichshübe senkrecht oder quer verläuft.

5. Fertigungsmaschine nach einem der Ansprüche 1 bis 4, **dadurch gekennzeichnet, dass** die Führungselemente (6) paarweise an in Richtung der Ausgleichshübe einander gegenüberliegenden Enden. (8) des Ausgleichskörpers (3) angreifen, wobei an je einem Ende des Ausgleichskörpers (3) ein Paar von Führungselementen (6) angreift, die im Abstand zueinander parallel verlaufen und die parallel wirken.

6. Fertigungsmaschine nach einem der Ansprüche 1 bis 5, **dadurch gekennzeichnet, dass** die Führungselemente (6) mit ihren Enden (9) an einem Gehäuseteil (7) der Fertigungsmaschine (1) befestigt sind und mit einem in ihrer Mitte zwischen den Enden (9) des jeweiligen Führungselementes (6) gelegenen Bereichs (10) am Ausgleichskörper (3) angreifen, wobei die Führungselemente (6) paarweise mit einem Ende jeweils am Ausgleichskörper (3) angreifen, wobei die anderen, freien Enden (9) der Führungselemente (6) eines Paares voneinander weg zeigen, insbesondere in entgegengesetzte Richtungen zeigen, und an dem Gehäuseteil (7) der Fertigungsmaschine (1) befestigt sind.

7. Fertigungsmaschine nach einem der Ansprüche 1 bis 6, **dadurch gekennzeichnet, dass** der Antrieb (4) ein Linearmotor (11) oder ein Tauchanker oder dergleichen ist.

8. Fertigungsmaschine nach einem der Ansprüche 1 bis 7, **dadurch gekennzeichnet, dass** der Stator oder der durch Bestromung erregbare Teil des Antriebs (4) mit dem Ausgleichskörper (3) und der permanenterregte Teil (13) des Antriebs (4) mit dem Werkzeughalter (2) verbunden sind und dass am Werkzeugträger (2) ein Schlitten (14) ausgebildet ist, der die Permanentmagnete (15) des Linearmotors (11) trägt.

9. Fertigungsmaschine nach, nach Anspruch 8, **dadurch gekennzeichnet, dass** die Permanentmagnete (15) den Schlitten (14) aussteifen.

10. Fertigungsmaschine nach einem der Ansprüche 8 oder 9, **dadurch gekennzeichnet, dass** die Permanentmagnete (15) auf beiden dem Stator (12) des Linearmotors (11) zugewandten Seiten mit einer Abdeckung (16), vorzugsweise einer Kohlefaserplatte, abgedeckt und/oder stoffschlüssig verbunden sind.

11. Fertigungsmaschine nach einem der Ansprüche 8 bis 10, **dadurch gekennzeichnet, dass** der die Permanentmagnete (15) aufnehmende Zwischenraum (17) zwischen den Abdeckungen (16) mit einer Vergussmasse ausgegossen ist.

12. Fertigungsmaschine nach einem der Ansprüche 8 bis 11, **dadurch gekennzeichnet, dass** die Permanentmagnete (15) in eine Tragestruktur eingefügt sind.

13. Fertigungsmaschine nach einem der Ansprüche 8 bis 12, **dadurch gekennzeichnet, dass** der Werkzeugträger (2) und/oder der Schlitten (14) an dem Gehäuseteil (7) oder einem mit dem Gehäuseteil (7) fest verbundenen Teil gelagert ist.

14. Fertigungsmaschine nach einem der Ansprüche 8 bis 13, **dadurch gekennzeichnet, dass** der Hub der Oszillationsbewegung des Werkzeugs kleiner ist als der Umfang der Wälzkörper (5) des Wälzlagers.

15. Fertigungsmaschine nach einem der Ansprüche 8 bis 14, **dadurch gekennzeichnet, dass** Oszillationshübe zwischen 0,01 mm und 45,00 mm ausführbar sind, wobei der Ausgleichshub 2 mm nicht übersteigt.

## Claims

1. Production machine for non-circular workpieces, particularly a cam turning machine (1), having an oscillatingly movable tool and tool carrier (2) and having a compensating member (3) movable in the opposite direction relative thereto, serving for impulse decoupling, the movement of the workpiece being adapted to be initiated or executed by a drive (4) acting between the tool carrier (2) and the compensating member (3), the tool carrier (2) being mounted on bearings by means of roller elements (5), **characterised in that** the compensating member (3) is suspended from a housing part (7) of the production machine (1) by means of guide elements (6) that provide guidance of the movement of the compensating member and a restoring force that is opposed to the compensating strokes, and **in that** the compensating member (3) has a mass that is so many times greater than the mass of the tool carrier (2) carrying the tool that the compensating strokes of the compensating member (3) corresponding to the oscillating movements of the tool carrier (2) are within the range of elastic deformation of the guide elements (6) that absorbs the compensating strokes.

2. Production machine according to claim 1, **characterised in that** the mass of the compensating member (3) is at least three times, more particularly at least five times or at least ten times, the mass of the tool carrier (2) carrying the tool.

3. Production machine according to claim 1 or 2, **characterised in that** the guide elements (6) in the resting position have a shape the extent of which, in the direction of the compensating strokes, is substantially less than the extent at right-angles to the direction of the compensating strokes, more particularly less than one-tenth of the extent at right-angles to the direction of the compensating strokes, and/or **in that** the guide elements (6) prevent movement of the compensating body (3) laterally of or at right-angles to the direction of the compensating strokes.

4. Production machine according to one of claims 1 to 3, **characterised in that** the guide elements (6) are partly or exclusively embodied as strip-shaped springs which counteract the deflection of the compensating member (g) produced by the compensating strokes, each of the guide elements (6) being, in particular, flat or strap-shaped, and in the resting position being located substantially in a plane to which the direction of the compensating strokes runs perpendicularly or transversely.

5. Production machine according to one of claims 1 to 4, **characterised in that** the guide elements (6) engage in pairs on ends (8) of the compensating member (3) located opposite one another in the direction of the compensating strokes, while acting on one end of the compensating member (3) is a pair of guide elements (6) which run parallel to one another at a spacing from one another and act in parallel.

6. Production machine according to one of claims 1 to 5, **characterised in that** the guide elements (6) are attached by their ends (9) to a housing part (7) of the production machine (1) and engage on the compensating member (3) with a region (10) located in their centre between the ends (9) of the respective guide element (6), the guide elements (6) engaging in pairs with one end on the compensating member (3), while the other, free ends (9) of the guide elements (6) in a pair point away from each other, and particularly point in opposite directions, and are attached to the housing part (7) of the production machine (1).

7. Production machine according to one of claims 1 to 6, **characterised in that** the drive (4) is a linear motor (11) or a plunger armature or the like.

8. Production machine according to one of claims 1 to 7, **characterised in that** the stator or the part of the drive (4) that can be excited by current is connected to the compensating member (3) and the permanently excited part (13) of the drive (4) is connected to the tool holder (2) and **in that** a carriage (14) that carries the permanent magnets (15) of the linear motor (11) is formed on the tool carrier.

9. Production machine according to claim 8, **characterised in that** the permanent magnets (15) brace the carriage (14).

10. Production machine according to one of claims 8 or 9, **characterised in that** the permanent magnets (15) are covered with and/or materially connected to a cover (16), preferably a carbon fibre panel (16), on both sides facing the stator (12) of the linear motor (11).

11. Production machine according to one of claims 8 to 10, **characterised in that** the intermediate space (17) that accommodates the permanent magnets (15) is filled with a casting composition between the covers (16).

12. Production machine according to one of claims 8 to 11, **characterised in that** the permanent magnets (15) are incorporated in a support structure.

13. Production machine according to one of claims 8 to 12, **characterised in that** the tool carrier (2) and/or the carriage (14) is mounted on the housing part (7) or on a part that is fixedly attached to the housing part (7).

14. Production machine according to one of claims 8 to 13, **characterised in that** the stroke of the oscillating movement of the tool is less than the circumference of the rolling member (5) of the roller bearing.

15. Production machine according to one of claims 8 to 14, **characterised in that** oscillating strokes of between 0.01 mm and 45.00 mm can be executed, the compensating stroke being not more than 2 mm.

## Revendications

1. Machine de production de pièces à usiner non circulaires, notamment machine (1) de tournage non circulaire comprenant un outil et un porte-outils (2) pouvant effectuer des mouvements oscillants, et un corps de compensation (3) mobile en sens inverse par rapport à ces derniers et affecté au découplage impulsionnel, le mouvement de l'outil pouvant être déclenché ou exécuté par l'intermédiaire d'un entraînement (4) agissant entre le porte-outils (2) et le corps de compensation (3), ledit porte-outils (2) étant monté au moyen de corps de roulement (5), **caractérisée par le fait que** le corps de compensation (3) est suspendu à une partie de carter (7) de ladite machine de production (1) par l'intermédiaire d'éléments de guidage (6) provoquant un guidage du mouvement dudit corps de compensation, et développant une force de rappel qui agit en opposition aux courses de compensation ; et **par le fait que** le corps de compensation (3) est doté d'une masse représentant plusieurs fois la masse du porte-outils (2) portant l'outil, de façon telle que les courses de compensation dudit corps de compensation (3), correspondant aux mouvements oscillants dudit porte-outils (2), se situent dans la plage de la déformation élastique desdits éléments de guidage (6) qui absorbe lesdites courses de compensation.

2. Machine de production selon la revendication 1, **caractérisée par le fait que** la masse du corps de compensation (3) représente au moins le triple, en particulier au moins le quintuple ou au moins le décuple de la masse du porte-outils (2) portant l'outil.

3. Machine de production selon la revendication 1 ou 2, **caractérisée par le fait que** les éléments de guidage (6) offrent, en position de repos, une forme dont l'étendue est substantiellement moindre, dans la direction des courses de compensation, que l'étendue desdits éléments transversalement par rapport à la direction desdites courses de compensation et représente, en particulier, moins d'un dixième de l'étendue transversalement par rapport à ladite direction des courses de compensation ; et/ou **par le fait que** les éléments de guidage (6) empêchent un mouvement du corps de compensation (3) latéralement ou transversalement par rapport à ladite direction des courses de compensation.

4. Machine de production selon l'une des revendications 1 à 3, **caractérisée par le fait que** les éléments de guidage (6) sont réalisés, partiellement ou exclusivement, en tant que ressorts en forme de bandes qui agissent en opposition à l'excursion du corps de compensation (3), provoquée par les courses de compensation, sachant que chacun desdits éléments de guidage (6) est notamment de réalisation aplatie ou en forme de patte et est situé pour l'essentiel, en position de repos, dans un plan perpendiculairement ou transversalement auquel s'étend la direction desdites courses de compensation.

5. Machine de production selon l'une des revendications 1 à 4, **caractérisée par le fait que** les éléments de guidage (6) viennent en prise, par paires, avec des extrémités (8) du corps de compensation (3) qui sont tournées à l'opposé l'une de l'autre dans la direction des courses de compensation, sachant qu'une paire d'éléments de guidage (6) s'étendant parallèlement à distance l'un de l'autre, et agissant parallèlement, vient en prise avec une extrémité respective dudit corps de compensation (3).

6. Machine de production selon l'une des revendications 1 à 5, **caractérisée par le fait que** les éléments de guidage (6) sont fixés à une partie de carter (7) de ladite machine de production (1), par leurs extrémités (9), et viennent en prise avec le corps de compensation (3) par une zone (10) située en leur centre, entre les extrémités (9) de l'élément de guidage (6) considéré, sachant que lesdits éléments de guidage (6) viennent en prise par paires respectives avec ledit corps de compensation (3), par une extrémité, et sachant que les autres extrémité libres (9) desdits éléments de guidage (6) d'une paire s'éloignent les unes des autres, pointent notamment dans des directions opposées, et sont fixées à ladite partie de carter (7) de ladite machine de production (1).

7. Machine de production selon l'une des revendications 1 à 6, **caractérisée par le fait que** l'entraînement (4) est un moteur linéaire (11) ou un noyau plongeur, voire un élément similaire.

8. Machine de production selon l'une des revendications 1 à 7, **caractérisée par le fait que** le stator, ou la partie de l'entraînement (4) pouvant être excitée par alimentation électrique, est raccordé(e) au corps de compensation (3), et la partie (13) à excitation permanente dudit entraînement (4) est connectée au porte-outils (2) ; et **par le fait qu'**une pièce coulissante (14), portant les aimants permanents (15) du moteur linéaire (11), est ménagée sur ledit porte-outils (2).

9. Machine de production selon la revendication 8, **caractérisée par le fait que** les aimants permanents (15) rigidifient la pièce coulissante (14).

10. Machine de production selon l'une des revendications 8 ou 9, **caractérisée par le fait que** les aimants permanents (15) sont recouverts, des deux côtés tournés vers le stator (12) du moteur linéaire (11), par une pièce de recouvrement (16) revêtant, de préférence, la forme d'une plaque en fibres de carbone, et/ou sont reliés matériellement à ladite pièce.

11. Machine de production selon l'une des revendications 8 à 10, **caractérisée par le fait que** l'espace intercalaire (17), recevant les aimants permanents (15) entre les pièces de recouvrement (16), est comblé par une masse de scellement.

12. Machine de production selon l'une des revendications 8 à 11, **caractérisée par le fait que** les aimants permanents (15) sont intégrés dans une structure de support.

13. Machine de production selon l'une des revendications 8 à 12, **caractérisée par le fait que** le porte-outils (2), et/ou la pièce coulissante (14), est/sont monté(e)(s) sur la partie de carter (7) ou sur une partie reliée rigidement à ladite partie de carter (7).

14. Machine de production selon l'une des revendications 8 à 13, **caractérisée par le fait que** la course du mouvement oscillant de l'outil est plus petite que le pourtour des corps de roulement (5) du palier de roulement.

15. Machine de production selon l'une des revendications 8 à 14, **caractérisée par le fait que** des courses oscillatoires comprises entre 0, 01 mm et 45, 00 mm peuvent être exécutées, la course de compensation n'excédant pas 2 mm.
